# EUROPEAN PATENT APPLICATION

(11) **EP 2 052 775 A1**
(43) Date of publication of application: **29.04.2009**
(21) Application number: 07791957.9
(22) Date of filing: 03.08.2007
(51) Int. Cl.: B01J 20/18, F01N 3/10

(54) **NITROGEN OXIDES ADSORBER AND PROCESS FOR PRODUCTION THEREOF**

(30) Priority: 07.08.2006 JP 2006214593
(71) Applicant: TOYOTA JIDOSHA KABUSHIKI KAISHA, Aichi-ken, 471-8571 (JP)
(72) Inventor: KANAZAWA, Takaaki, Toyota-shi, Aichi 4718571 (JP)
(74) Representative: Kuhnen, Rainer K.
(86) International application number: PCT/JP2007/065284
(87) International publication number: WO 2008/018388

(57) **Abstract**

This method for producing a nitrogen oxide adsorbent comprising zeolite loaded with Fe by ion exchange comprises an impregnation step of impregnating zeolite with an aqueous solution of ferric chloride, and a heat treatment step of heating the zeolite impregnated with the aqueous solution of the ferric chloride to a temperature at or above a boiling point of the ferric chloride, thereby loading the zeolite with Fe by ion exchange. By impregnating zeolite with an aqueous solution of ferric chloride and then heating the impregnated zeolite to a predetermined temperature, a large amount of iron can reach ion exchange sites in zeolite, though the reason is not clear. As a result, a resulting Fe-zeolite nitrogen oxide adsorbent improves in ability to adsorb nitrogen oxides.

## Description

### TECHNICAL FIELD

The present invention relates to a nitrogen oxide adsorbent and a method for producing the same, and particularly to a nitrogen oxide adsorbent capable of adsorbing nitrogen oxides contained in low-temperature exhaust gases and a method for producing the same.

### BACKGROUND ART

Three-way catalysts are widely used as exhaust gas purifying catalysts which purify HC, CO and nitrogen oxides (NOx) contained in exhaust gases from automobiles. Owing to technical improvements in exhaust gas purifying catalysts such as these three-way catalysts and/or NOx storage and reduction catalysts, harmful components in exhaust gases from automobiles have become extremely small in amount. However, since the exhaust gas purifying catalysts purify the harmful components by oxidation or reduction by use of catalytic action of catalyst metals such as Pt, there is a problem that the catalysts are inactive at temperatures below activation temperature of the used catalyst metals (about 200 °C).

That is to say, for tens of seconds from immediately after engine start to the time when temperature of the exhaust gas purifying catalysts rises to or above activation temperature of the catalyst metals, harmful components are emitted without being purified. Especially in winter, the time during which the harmful components are emitted without being purified increases.

So, it is conceivable that for the time from immediately after engine start to the time when temperature of the exhaust gas purifying catalysts rises to or above activation temperature of the catalyst metals, emission of a harmful component is suppressed by making the harmful component adsorbed by an adsorbent capable of adsorbing the harmful component.

For example, an apparatus for purifying exhaust gases is known (for example, refer to Patent Document 1) in which a nitrogen oxide adsorbent is placed in the vicinity of an exhaust gas purifying catalyst, nitrogen oxides in exhaust gases are adsorbed by the nitrogen oxide adsorbent in a low temperature range, and nitrogen oxides released from the nitrogen oxide absorbent are reduced and purified by the exhaust gas purifying catalyst in a high temperature range.

This Patent Document 1 discloses mordenite or ZSM-5 zeolite loaded with K, Ba, La or Ce by ion exchange as a nitrogen oxide adsorbent. This nitrogen oxide adsorbent is produced by immersing mordenite or ZSM-5 zeolite in an aqueous potassium acetate solution, an aqueous barium acetate solution, an aqueous lanthanum nitrate solution or an aqueous cerium nitrate solution of a predetermined concentration, and carrying out filtration and then drying and calcination.

On the other hand, zeolite loaded with Fe by ion exchange is conceivable as a nitrogen oxide adsorbent which can be expected to have a higher adsorbing ability than that of zeolite loaded with Ce, Pd or the like by ion exchange.

As a method for loading zeolite with Fe by ion exchange, generally a method has been employed in which ion exchange is carried out by introducing zeolite to an aqueous nitrate solution and stirring the solution added with the zeolite and then the solution added with the zeolite is filtered. The reason why the aqueous nitrate solution is used here is that nitrates which are easily solvable in water are many in kind, easy to stock and low in price.
Patent Document 1: Japanese Unexamined Patent Publication No.2001-289035

### DISCLOSURE OF INVENTION

### Problems to be Solved by Invention

However, in the abovementioned conventional method, ion exchange of zeolite with Fe was insufficient. The reason is unclear, but is believed to be that when Fe exists as trivalent cations, monovalent Al anions in zeolite and trivalent Fe cations cannot maintain charge balance and therefore ion exchange is difficult to occur in regions of Al cations.

Therefore, it could be hardly said that a nitrogen oxide adsorbent obtained by the abovementioned conventional method
in which zeolite is impregnated with the aqueous ferric nitrate solution always has a sufficient adsorbing ability.

The present invention has been made in view of the abovementioned circumstances and it is an object of the present invention to improve adsorbing ability of a nitrogen oxide adsorbent by carrying out sufficient ion exchange of zeolite with Fe.

### Means for Solving the Problems

A method of the present invention for producing a nitrogen oxide adsorbent, which solves the abovementioned problems, is a method for producing a nitrogen oxide adsorbent comprising zeolite loaded with Fe by ion exchange, the method being **characterized in that** it comprises an impregnation step of impregnating zeolite with an aqueous solution of ferric chloride and a heat treatment step of heating the zeolite impregnated with the aqueous solution of the ferric chloride to a temperature at or above a boiling point of the ferric chloride, thereby loading the zeolite with Fe by ion exchange.

It is preferable that in the heat treatment step of the method of the present invention for producing a nitrogen oxide adsorbent, an evaporation-to-dryness step of evaporating the zeolite impregnated with the ferric chloride to dryness is carried out and the dried zeolite is heated to the temperature at or above the boiling point of the ferric chloride.

In the method of the present invention for producing a nitrogen oxide adsorbent, it is preferable that the zeolite is at least one of H-ZSM5 and NH₄-ZSM5.

The nitrogen oxide adsorbent set forth in claim 4 is one obtained by the method for producing a nitrogen oxide absorbent set forth in any one of claims 1 to 3. That is to say, this nitrogen oxide adsorbent is **characterized in that** it comprises zeolite loaded with Fe by ion exchange which is obtained by impregnating zeolite with an aqueous solution of ferric chloride and then heating the impregnated zeolite. It is preferable that the zeolite in this nitrogen oxide adsorbent is at least one of H-ZSM5 and NH₄-ZSM5.

### Advantages of the Invention

In the method of the present invention for producing a nitrogen oxide adsorbent, by impregnating zeolite with an aqueous solution of ferric chloride and then heating the impregnated zeolite to a predetermined temperature, a larger amount of iron can reach ion exchange sites in the zeolite, although the reason is not clear. As a result, a resulting Fe-zeolite nitrogen oxide adsorbent improves in ability to adsorb nitrogen oxides.

### BRIEF DESCRIPTION OF DRAWINGS

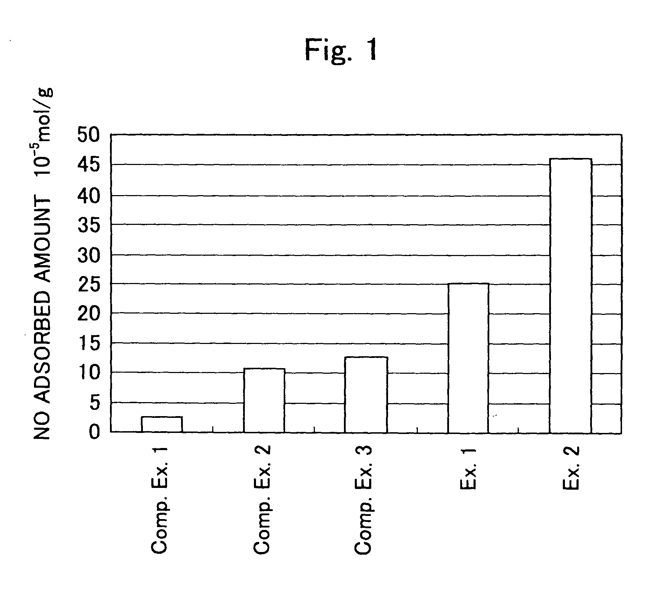

[Figure 1] This is a view showing adsorbing ability test results of nitrogen oxide adsorbents of Examples 1 and 2 and Comparative Examples 1 to 3.

### BEST MODE FOR CARRYING OUT THE INVENTION

The method of the present invention for producing a nitrogen oxide adsorbent is a method for producing a nitrogen oxide adsorbent comprising zeolite loaded with Fe by ion exchange, wherein the method comprises an impregnation step and a heat treatment step.

In the impregnation step, zeolite is impregnated with an aqueous solution of ferric chloride (iron(III) chloride, FeCl₃).

The method for impregnating zeolite with an aqueous solution of ferric chloride is not particularly limited, but, for example, a method can be suitably employed in which zeolite powder is added to an aqueous solution of ferric chloride and the aqueous solution of the ferric chloride added with the zeolite is stirred. At this time, in view of carrying out ion exchange with as much Fe as possible at Al anion regions in the zeolite, which can become ion exchange sites, it is preferable that the concentration of the aqueous solution of the ferric chloride and the amount of zeolite added to this aqueous solution of the ferric chloride are adjusted so that Al in the zeolite and Fe have a molar ratio of 1 : 1.

The kind of zeolite used in the method of the present invention for producing a nitrogen oxide adsorbent is not particularly limited, but ferrierite, ZSM5, β-zeolite and mordenite are preferable because they are advantageous in increasing surface area owing to their relatively small pore diameters. Moreover, in view of improving ability to adsorb nitrogen oxides, ZSM5 is preferable and in order to further improve adsorbing ability, NH₄-ZSM5 is more preferable than H-ZSM5.

It is noted that in the method of the present invention for producing a nitrogen oxide adsorbent, either of H-zeolite and NH₄-zeolite can be used. Moreover, of these kinds of zeolite, one kind can be used singly and a plurality of kinds can be used in combination.

The molar ratio of SiO₂ to Al₂O₃ in the abovementioned zeolite is preferably not more than 200, more preferably not more than 100 and especially preferably not more than 50 in view of increasing the amount of ion exchange sites and carrying out ion exchange with as much Fe as possible. The molar ratio of SiO₂ to Al₂O₃ is preferably smaller because as the ratio becomes smaller, the amount of ion exchange sites becomes larger. Accordingly, as long as the zeolite can be synthesized, it is preferable that the molar ratio of SiO₂ to Al₂O₃ is as small as possible. It is noted that the molar ratio of SiO₂ to Al₂O₃ in ZSM5 zeolite which can be produced at present has a lower limit of about 15.

Moreover, form and the like of the zeolite in being impregnated with the aqueous solution of the ferric chloride are not particularly limited and can be powder, a molding
in which the zeolite is molded in a predetermined shape, or an embodiment of a zeolite coating layer produced by preparing a slurry by mixing zeolite powder with silica sol, water or the like, coating the slurry on a monolithic substrate formed of cordierite or the like, and drying and calcining the coated substrate.

In the heat treatment step, the zeolite impregnated with the aqueous solution of the ferric chloride is heated to a temperature at or above a boiling point (314 °C) of the ferric chloride, thereby loading zeolite with Fe by ion exchange.

If the heating temperature in carrying out ion exchange of zeolite with Fe is below the boiling point of the ferric chloride, ion exchange of zeolite with Fe will be insufficient. On the other hand, if the heating temperature at this time is too high, oxidation of Fe will be promoted and ability to adsorb NOx will decrease. Therefore, the heating temperature in carrying out ion exchange of zeolite with Fe is preferably 314 to 500 °C and more preferably 314 to 330 °C.

Moreover, it is preferable that in the heat treatment step, an evaporation-to-dryness step of evaporating the zeolite impregnated with the ferric chloride to dryness is carried out and the dried zeolite is heated to a temperature at or above a boiling point of the ferric chloride.

If the evaporation-to-dryness step is thus carried out before heating the impregnated zeolite to the temperature at or above the boiling point of the ferric chloride, adsorbing ability of a resulting Fe-zeolite nitrogen oxide adsorbent can be further improved in comparison with that of an adsorbent obtained by stirring the solution added with the zeolite, for instance, for about several hours to half a day and then carrying out filtration and drying.

The method for evaporating the impregnated zeolite to dryness is not particularly limited, but, for example, a method can be suitably employed in which the aqueous solution of the ferric chloride added with the zeolite is heated to a temperature (about 80 to 90 °C) around which water does not boil while being stirred.

As mentioned above, in the method of the present invention for producing a nitrogen oxide adsorbent, zeolite is loaded with Fe by ion exchange by impregnating zeolite with an aqueous solution of ferric chloride and then heating the impregnated zeolite at a temperature at or above a boiling temperature of the ferric chloride. By doing so, a larger amount of iron can reach ion exchange sites in the zeolite, although the reason is not clear. As a result, a resulting Fe-zeolite nitrogen oxide adsorbent improves in ability to adsorb nitrogen oxides.

Since the resulting nitrogen oxide adsorbent improves in ability to adsorb nitrogen oxides, use of this nitrogen oxide adsorbent can contribute to miniaturization and cost reduction of an apparatus for purifying exhaust gases, because, for example, the nitrogen oxide adsorbent can exhibit as much adsorbing ability as that of a conventional one while reducing the amount of the nitrogen oxide adsorbent used.

### Examples

### (Example 1)

H-ZSM5 powder having an SiO₂ to Al₂O₃ molar ratio of 28 (the trade name "HSZ-830HOA" produced by Tosoh Corporation) was prepared as zeolite.

On the other hand, 3.4 g of ferric chloride powder (anhydrous FeCl₃ powder produced by Nacalai Tesque, Inc.) were solved in pure water, thereby preparing an aqueous solution of ferric chloride of a predetermined concentration.

Then, 20 g of the H-ZSM5 powder was added to and immersed in the aqueous solution of ferric chloride, thereby impregnating the H-ZSM5 powder with the aqueous solution of ferric chloride. The amount of the material prepared at this time (the amount of H-ZSM5 powder added with respect to the aqueous solution of ferric chloride) was adjusted so that Al in H-ZSM5 and Fe had a molar ratio of 1 : 1.

The aqueous solution of ferric chloride added with the H-ZSM5 powder was heated at 90 °C for 120 minutes while stirred by a stirrer, thereby evaporating the H-ZSM5 impregnated with the aqueous solution of ferric chloride to dryness.

Then, the dried H-ZSM5 powder was heated at 400 °C for 30 minutes, thereby evaporating ferric chloride and loading the H-ZSM5 with Fe by ion exchange. Thus a nitrogen oxide adsorbent of Example 1 was obtained.

### (Example 2)

A nitrogen oxide adsorbent of Example 2 was obtained in a similar manner to Example 1 above, except that NH₄-ZSM5 powder having an SiO₂ to Al₂O₃ molar ratio of 28 (the trade name "HSZ-830NHA" produced by Tosoh Corporation) was used as zeolite.

### (Comparative Example 1)

Similar H-ZSM5 powder to that of Example 1 was prepared.

On the other hand, Fe(NO₃)₃-9H₂O was prepared as an aqueous solution of ferric nitrate.

Then 20 g of the H-ZSM5 powder were added into 9.1 g of the aqueous solution of ferric nitrate and the mixture was stirred for half a day (12 hours), thereby impregnating the H-ZSM5 powder with the aqueous solution of ferric nitrate. The amount of the material prepared at this time (the amount of H-ZSM5 power added with respect to the aqueous solution of ferric nitrate) was adjusted so that Al in H-ZSM5 and Fe had a molar ratio of 1 : 1.

Then, after filtering the mixture, the obtained material was heated to dryness at 120 °C for 120 minutes and then heated at 500 °C for 120 minutes, thereby loading the H-ZSM5 with Fe by ion exchange. A nitrogen oxide adsorbent of Comparative Example 1 was thus obtained.

### (Comparative Example 2)

In a similar manner to Comparative Example 1 above, 20 g of the H-ZSM5 powder were added into 9.1 g of the aqueous solution of ferric nitrate and then the mixture was heated at 90 °C for 120 minutes while stirred by the stirrer, thereby evaporating the H-ZSM5 impregnated with the aqueous solution of ferric nitrate to dryness.

Then the dried H-ZSM5 powder was heated at 500 °C for 120 minutes, thereby loading the H-ZSM5 with Fe by ion exchange. A nitrogen oxide adsorbent of Comparative Example 2 was thus obtained.

### (Comparative Example 3)

Similar H-ZSM5 powder and ferric chloride powder to those of Example 1 were prepared.

Then 20 g of the H-ZSM5 powder and 3.4 g of the ferric chloride powder were physically mixed with each other. The obtained mixed powder was heated at 400 °C for 30 minutes, thereby evaporating ferric chloride and loading the H-ZSM5 with Fe by ion exchange. A nitrogen oxide adsorbent of Comparative Example 3 was thus obtained.

### (Evaluation of Adsorbing Ability)

Adsorbing ability of the nitrogen oxide adsorbents of Examples 1 and 2 and Comparative Examples 1 to 3 above was examined as follows.

First, 2 g of the respective nitrogen oxide adsorbents were placed in an evaluation device and subjected to N₂ purge treatment in which the respective adsorbents were heated at 500 °C for 10 minutes in a nitrogen gas stream. Then a model gas comprising NO: 900 ppm, CO: 6000 ppm, CO₂: 16 % and the remainder being N₂ was circulated at room temperature (25 °C) and a flow rate of 10 liter/minute for 480 seconds. The amount of NO component adsorbed by each of the nitrogen oxide adsorbents was calculated from NO component concentrations of an inlet gas and an outlet gas. Thus the NO adsorbed amount was obtained. The results are shown in Figure 1.

As apparent from Figure 1, the nitrogen oxide adsorbents of Examples 1 and 2 obtained by loading ZSM5 with Fe by ion exchange by evaporating ZSM5 impregnated with the aqueous solution of ferric chloride to dryness and heating the dried ZSM5 to a temperature at or above a boiling point of the ferric chloride had NO adsorbed amounts of not less than 25 x 10⁻⁵ mol/g and remarkably improved in ability to adsorb nitrogen oxides with respect to the nitrogen oxide adsorbents of Comparative Examples 1 to 3.

Therefore, it is understood that a larger amount of Fe can reach ion exchange sites in ZSM5 by impregnating ZSM5 with an aqueous solution of ferric chloride, vaporizing the impregnated ZSM5 to dryness and then calcining the dried material.

Moreover, the nitrogen oxide adsorbent of Example 2 using NH₄-ZSM5 as zeolite had an NO adsorbed amount of not less than 45 x 10⁻⁵ mol/g and improved in ability to adsorb nitrogen oxides with respect to that of the nitrogen oxide adsorbent of Example 1 using H-ZSM5.

On the other hand, the nitrogen oxide adsorbents of Comparative Examples 1 to 3 had NO adsorbed amounts of less than about 13 x 10⁻⁵ mol/g.

Especially, the nitrogen oxide adsorbent of Comparative Example 1 obtained by immersing ZSM5 in an aqueous solution of ferric nitrate and stirring the mixture for half a day, then filtering the mixture, and drying and calcining the obtained material had an NO adsorbed amount of about 2.5 x 10⁻⁵ mol/g. This is believed to be because a large amount of Fe ions were run off in filtering the mixture.

Moreover, the nitrogen oxide adsorbents of Examples 1 and 2 obtained by immersing ZSM5 in an aqueous solution of ferric chloride remarkably improved in adsorbing ability with respect to the nitrogen oxide adsorbent of Comparative Example 2 obtained by immersing ZSM5 in an aqueous solution of ferric nitrate. Although the reason is not clear, this is believed to be because a larger amount of Fe could reach ion exchange sites in ZSM5.

Furthermore, because the nitrogen oxide adsorbents of Examples 1 and 2 obtained by impregnating ZSM5 with an aqueous solution of ferric chloride and evaporating the impregnated ZSM5 to dryness and calcining the dried material remarkably improved in adsorbing ability with respect to Comparative Example 3 obtained by physically mixing ferric chloride powder and ZSM5 powder, it is believed that dispersion degree of ferric chloride before evaporation might exercise some effect on final ion exchange degree.

It is noted that the present inventor confirmed by experiments that nitrogen oxide adsorbents using mordenite as zeolite had approximately as good adsorbing ability as those of the nitrogen oxide adsorbents using ZSM5.

Furthermore, if nitrogen oxide adsorbents employ mordenite, β, or ferrierite as zeolite, it is believed that a similar effect of improving adsorbing ability to those of the nitrogen oxide adsorbents using ZSM5 can be obtained by impregnating the zeolite with an aqueous solution of iron chloride and then heating the impregnated zeolite.

## Claims

1. A method for producing a nitrogen oxide adsorbent comprising zeolite loaded with Fe by ion exchange, the method being **characterized in that** it comprises:
an impregnation step of impregnating zeolite with an aqueous solution of ferric chloride;
a heat treatment step of heating the zeolite impregnated with the aqueous solution of the ferric chloride to a temperature at or above a boiling point of the ferric chloride, thereby loading the zeolite with Fe by ion exchange.

2. The method for producing a nitrogen oxide adsorbent set forth in claim 1, wherein in the heat treatment step, an evaporation-to-dryness step of evaporating the zeolite impregnated with the ferric chloride to dryness is carried out and the dried zeolite is heated to the temperature at or above the boiling point of the ferric chloride.

3. The method for producing a nitrogen oxide adsorbent set forth in claim 1 or 2, wherein the zeolite is at least one of H-ZSM5 and NH₄-ZSM5.

4. A nitrogen oxide adsorbent obtained by the method for producing a nitrogen oxide adsorbent set forth in any one of claims 1 to 3.
